# EUROPEAN PATENT SPECIFICATION

(11) **EP 2 624 684 B1**
(45) Date of publication and mention of the grant of the patent: **12.11.2014**
(21) Application number: 11767818.5
(22) Date of filing: 30.09.2011
(51) Int. Cl.: A01K 31/00, A01K 31/04, A01K 45/00

(54) **DEVICE AND METHOD FOR CLEANING A SUPPORT STRUCTURE FOR POULTRY HOLDERS**
VORRICHTUNG UND VERFAHREN ZUR REINIGUNG EINER STÜTZSTRUKUTR FÜR GEFLÜGELKÄFIGE
DISPOSITIF ET PROCÉDÉ DE NETTOYAGE D'UNE STRUCTURE DE SUPPORT POUR CASIERS À VOLAILLES

(30) Priority: 04.10.2010 NL 2005448
(43) Date of publication of application: 14.08.2013
(73) Proprietor: Marel Stork Poultry Processing B.V., 5831 AV Boxmeer (NL)
(72) Inventor: VAN DEN NIEUWELAAR, Adrianus Josephes, NL-5421 XG Gemert (NL); PETERS, Erik Hendrikus Werner, NL-5831 CX Boxmeer (NL); STALS, Peter Simon Gerardus, NL-5735 CT Aarle-Rixtel (NL)
(74) Representative: Van den Heuvel, Henricus Theodorus
(86) International application number: PCT/NL2011/050663
(87) International publication number: WO 2012/047094

(56) References cited:
- BE-A3- 1 013 784
- GB-A- 2 454 659
- US-A- 3 702 600
- US-B1- 6 655 897

## Description

The present invention relates to a device and a method for mechanized emptying of poultry holders and subsequent cleaning of a support structure of the emptied poultry holders on an underside only. The invention relates more particularly to cleaning only the underside of a support structure for poultry holders using a liquid following the mechanized opening and emptying of the poultry holders placed in the support structure.

During transport of poultry, for instance from a poultry farm to another poultry farm or from a poultry farm to a slaughterhouse, the poultry is usually transported alive in poultry holders. These poultry holders are also referred to as pallets, crates, cages or containers. A plurality of such poultry holders can be combined in a shared support structure. Such a support structure generally consists of a steel frame in which a number of poultry holders are held in stacked (multilayer) manner and from which the poultry holders can be wholly or partially removed, and can thus for instance be embodied such that they can slide optionally fully into and out of the support structure, similarly to drawers in a chest of drawers. Another possibility is to integrate the containers with the support structure so that this latter comprises compartments provided with individually controllable closing means. During use the poultry holders become soiled with manure, feathers and other dirt. A current problem in the poultry farming sector is the rapid spread of diseases, for which, among other factors, the transport of poultry is an undesirable catalyst. For the purpose of the desired hygiene, and more particularly to prevent the spread of diseases, the poultry containers can of course be thoroughly cleaned after they have been emptied. In practice however the support structures for the poultry holders are cleaned in less than disciplined and thorough manner, and when this does occasionally take place, the whole support structure is generally sprayed down. Complete spraying down and/or blowing clean of the support structure involves considerable work, requires a special cleaning area, requires a large amount of cleaning liquid and cannot be easily mechanized such that good cleaning results are achieved. Consistent and full cleaning of the support structures does not therefore represent a workable solution in practice.

It is an object of the present invention to prevent the spread of diseases and to reduce the chance of cross-infection by providing a method and a device with which the risks of the spread of poultry diseases as a result of poultry transport are reduced without many logistical drawbacks and without considerable investment having to be made. An additional, not insignificant object is to provide a technique which can be advantageously combined with the already existing automated processes for handling poultry holders.

The invention provides for this purpose a device for mechanized emptying of poultry holders and subsequent cleaning of a support structure of the emptied poultry holders on an underside only, comprising: an unloading system for mechanized opening and emptying of poultry holders placed in the support structure; a liquid bath accessible to the support structure from the upper side; transport means provided with at least one displaceable support surface for supporting the support structure, which transport means lead from the unloading system to the liquid bath and subsequently through and out of the liquid bath such that only the underside of the support structure is immersed in the liquid bath and then removed again from the liquid bath by the transport means; and a liquid supply for carrying a cleaning liquid into the liquid bath.

The insight of the inventors is that particularly the underside of the support structures forms a major source in the spread of diseases, bacteria, viruses and the like between different locations. It is possible here to envisage the spread of diseases, bacteria, viruses and the like between different locations such as: production locations (poultry houses for, among other activities, breeding and rearing), transport means (trucks) and processing locations (such as selection centres and slaughterhouses). Not only it is necessary here to envisage fouling present on the exterior of the underside of the support structures, but internal spaces on the underside of the support structure usually also become fouled essentially due to dirt penetrating therein. Such internal spaces can for instance include the inside of (tubular) profiles or the open spaces arranged in the support structure in order to for instance receive the prongs of a fork-lift truck.

The insight of the present invention is that a less than obvious solution can be developed with which it is seemingly not possible to achieve particularly good cleaning results but which consists of also immersing only the underside of the support structure in a basin or bath in mechanized manner, this coupled in line with the mechanized unloading of the poultry holders, in order to thus disinfect at least a significant part of the base (also referred to as foot) of the support structure. The advantage of emptying the poultry holders coupled with cleaning the support structures on the underside only is that this makes it possible to rigidly couple the two processes to each other in relatively simple manner. This guarantees that the underside of each support structure is cleaned after the poultry holders held by the support structure have been emptied. It is precisely the fouled undersides of support constructions which are found to be the cause of the cross-infection between different locations. It is desirable to remove (flush away) or at least neutralize (disinfect) the fouling (which usually comprises faeces, ground material and food remnants) present on the underside of the support constructions. A cleaning liquid must of course be present for this purpose in the liquid bath. Another advantage of immersing only the underside of the support structure is that this requires a less voluminous cleaning device, which in practice can therefore generally be constructed in relatively simple manner behind an unloading system for the poultry holders.

Yet another advantage of immersing the underside of the support construction is that poorly accessible positions of the support structure for poultry holders can also come into contact with cleaning liquid, which produces a favourable cleaning result. It is for instance possible here to envisage the inside of profile parts of the support structure situated on the underside of the support constructions; the cleaning liquid will be able to flow like a "tidal wave" through such profiles, whereby dirt is carried away and the profile parts are also cleaned internally. It is also noted that it is possible to only partially immerse the support structure without poultry holders or the support structure with poultry holders received therein in the liquid bath, it being possible to choose one of these two options depending on the existing logistics with which poultry holders and support structures are processed. The only partial immersion can also be combined as desired with spraying (under pressure) the support structure for poultry holders. Owing to the transport means and the measure that the transport means support the support construction it is possible to clean relatively voluminous and heavy support structures without the intervention, or with limited involvement, of operatives. As a result of the support the orientation of the support constructions during transport and cleaning is fully controlled (other than if for instance they are suspended from a conveyor). Another advantage of supported transport of the support constructions is that the conveyor is thus simple to load and unload. The chance of persons coming into contact with fouling on the support structures or with cleaning agent is also limited. Not only is a certain cleaning result thus obtained, this additional cleaning step moreover requires little time. Another not unimportant advantage of only partial immersion in the cleaning liquid is that this improves efficiency; a liquid bath of only limited depth is required, in which relatively little cleaning liquid also need be available. The only limited immersion of the support structure (the lower part) moreover saves time, space and flushing liquid relative to complete immersion. It may be argued that cleaning only a limited part of the support structure in this manner is only half the job, but several considerations need to be taken into account here: the underside of the support structure is generally the most fouled, and other cleaning techniques can optionally also be combined with the present one; the support structure can for instance also (occasionally or otherwise) be additionally sprayed clean or otherwise fully cleaned.

The liquid bath accessible to the support structure from the upper side can optionally be closable and is preferably dimensioned such that, when the underside of a support structure is introduced and removed, no or only limited quantities of cleaning liquid leave the bath.

In a specific embodiment the transport means are provided with a substantially horizontal first transport path for transporting the support structure from the unloading system to the liquid bath and, connecting thereto, an at least partially vertical second transport path which leads into the liquid bath for immersion of only the underside of the support structure for poultry holders in the liquid bath. It is further possible to provide the transport means with a third transport path leading through the liquid bath and connecting to the second transport path and having a substantially horizontal directional component and/or with a fourth transport path which connects to the third transport path, the fourth transport path comprising at least a vertical directional component and leading from a position in the liquid bath to a position above the liquid bath. The successive first and second transport paths make it possible to transport the support structures from the unloading system until their undersides are in the liquid bath. The only partial immersion of a support structure will normally also result in turbulence/ agitation of the cleaning liquid, which further supports the cleaning action of the liquid. It is also possible in this context to generate a liquid circulation and/or liquid turbulence in the liquid bath.

The second transport path makes it possible to lower the support structure in mechanical manner only partially into the liquid bath from above and the fourth transport path makes it possible to lift the support structure in mechanical manner out of the liquid bath again. The advantage of the presence of the third transport path having a substantially horizontal directional component and lying in the liquid bath, for instance formed by a roller track or an endless conveyor belt, is that the underside of the support structures can be moved through the liquid bath with this transport path, which will result in a relative displacement between the liquid and the underside of the support structure, so effecting an improved cleaning. Provided it has sufficient length, the third transport path can also function as buffer for support structures and the time for which the underside of a support structure remains in the cleaning liquid can hereby be increased. Examples of possible transport paths with a substantially horizontal directional component are a roller track or an endless belt. Such transport means supporting the support structures make it possible to process diverse types of support structure of a more or less complex form; the support structures do not require any specific means to enable handling by the device according to the present invention. A further advantage is that a supporting transport system can be combined relatively easily with transport systems usually present in slaughterhouses.

Yet another possibility is that the third transport path is situated wholly or partially in the liquid bath. The support structure for poultry holders is thus not only immersed in the cleaning liquid but also carried over a determined distance through it. It is particularly advantageous when profile parts for cleaning extend as much as possible in the direction of movement of the third transport path; the cleaning liquid will then be able to flow partially through possible open profile parts. A cleaning device wherein the support structure can be carried some distance through the liquid bath will however have to be larger than a device wherein only (vertical) immersion takes place, although it will normally also produce an improved cleaning result. Another advantage of such a throughfeed liquid bath is that successive support structures can be carried through the liquid bath in a continuous process. In a logistical process in which larger numbers of support structures have to be processed in line, this can be highly advantageous.

In addition, it is also possible for the transport means to be provided with a fourth transport path with at least a vertical directional component for lifting the support structure for poultry holders out of the liquid bath. Taking the support structure out of the liquid bath can consist of movement through the second transport path in reverse direction to the feed (so a return movement such that the second and fourth transport paths coincide while a third transport path is absent), although it is also possible for removal of the support structure from the liquid bath to take place along another path (i.e. after the support structure has been displaced along a third transport path to a fourth transport path varying from the second transport path). It is also desirable for the vertically displaceable support surface to be displaceable by a lifting mechanism. The support surface can thus move reciprocally as a lift. If a third transport path is absent, it is possible to have a vertically displaceable support surface engage on a lift guide. An example hereof is a roller guide engaging on a lifting mast. In order to enhance the cleaning effect the support surface can here move reciprocally in the liquid bath. The support surface is preferably not a closed surface but rather an open (imaginary) flat supporting structure, whereby turbulences in the cleaning liquid also result in as much turbulence as possible where the cleaning liquid makes contact with the support structure.

The transport means can be provided with a substantially vertically displaceable support surface for the support structures. This support surface can then be embodied such that it is displaceable between a position which connects to a conveyor feeding into (and optionally also discharging from) the support structures. In a practical embodiment the vertically displaceable support surface is also provided with transport means for substantially horizontal transport; the support structures can hereby also be displaced over the support surface in simple manner, this considerably simplifying loading and unloading of the support surface. Examples hereof are a roller track or conveyor belt integrated into the support surface.

In yet another favourable variant of the present invention the carrying surface of the transport means is pivotable between a substantially horizontal position and an inclining position. It thus becomes possible to allow the support structure which has been cleaned on the underside to drain at least partially (optionally above the liquid bath, but desirably above the liquid bath). The support structure does not of course have to be held in a tilted position to allow draining thereof. However, placing the support structure in one or more tilting positions (tilting in one direction or even in several directions as desired) has the advantage that the cleaning liquid can thus be drained better; particularly if it is in internal spaces (such as for instance hollow profile parts). Draining and collecting the cleaning liquid has several advantages. Cleaning liquid is generally expensive and consumption thereof can be reduced by draining and collection. The cleaning liquid is moreover usually aggressive, so that it is desirable to prevent it being released at undesirable locations. It is also undesirable to allow the cleaning liquid to dry up, since this may result in deposition of residue. It is further of great importance to be able to accurately determine the weight of the support structure (optionally with poultry holders present therein), since this affects determination (calculation) of the prior content (live poultry) before the support structure with poultry holders was emptied (tare weight).

The liquid supply can be provided with a water feed and a feed for disinfectant so that the composition (concentration) of the cleaning liquid in the liquid bath can be adapted to the conditions. It is further possible to provide a liquid buffer, with the advantage that sufficient cleaning liquid is thus available, which makes it possible to supply cleaning liquid quickly if this is desirable and whereby the level of the cleaning liquid can be adjusted when there is a need to do so, for instance in the presence of more or fewer support structures in the liquid bath or when there is a change in support structure type.

The liquid supply can further also comprise at least one nozzle located in the liquid bath for causing turbulence in the cleaning liquid and/or spraying the immersed part of the support structure. In order to ensure that (if desired) sufficient cleaning liquid is present in the liquid bath, the liquid supply can be provided with a sensor for detecting the height of a liquid level in the liquid bath, and with control means for maintaining a desired level of the liquid in the liquid bath. In similar manner the quality of the cleaning liquid can also be monitored, and optionally automatically adjusted, by means of another type of sensor.

The cleaning liquid can consist of water, optionally provided with one or more additional agents such as for instance a soap, a disinfectant, an antibacterial agent, any other cleaning agent or a combination thereof.

The cleaning action in the liquid bath can increase further when the liquid bath is provided with liquid turbulence-generating means. It is possible here to envisage a circulation pump, a driven rotor, moving and/or intermittent liquid jets and so on.

In order to control the feed of support structures for poultry holders to the liquid bath the transport means can be provided with a blocking means for blocking the feed of support structures. The support structures for poultry holders can thus be fed in controlled and sequential manner to the liquid bath.

The present invention also provides a method for mechanized emptying of poultry holders and subsequent cleaning of a support structure of the emptied poultry holders on an underside only, comprising the processing steps of: A) opening and emptying the poultry holders placed in a support structure in mechanized manner in an unloading system; B) displacing the support structure for poultry holders in supported and mechanized manner from the unloading system to a liquid bath; C) immersing the support structure for poultry holders only partially with the underside in supported manner in the liquid bath with cleaning agent in order to disinfect only the underside of the support structure; and D) removing the support structure for poultry holders, cleaned on the underside only, in supported manner from the liquid bath and allowing it to at least partially drain above the liquid bath. It is advantageous here for the support structure to be placed in a tilting position during draining of the underside of the cleaned support structure as according to processing step D). Residual cleaning liquid will hereby be better removed. It is however also possible to envisage other measures for removing residual cleaning liquid from the support structure, such as for instance blowing and/or shaking. Less cleaning liquid will in this way be lost. It is possible in similar manner to prevent a possibly pre-cleaned support structure entering the cleaning liquid with a large amount of adhering flushing water. The advantage here is that dilution of the cleaning liquid can thus be reduced. For the further advantages of the present method reference is made to the above stated advantages as described in respect of the device according to the present invention.

It is also possible to move only the undersides of the support structures for poultry holders through the liquid bath with a cleaning liquid at an advancing speed during processing step C). In order to further enhance the cleaning action, the support structures for poultry holders can be pre-cleaned, for instance by blowing or spraying off coarse fouling or by pre-soaking the support structure for poultry holders, before the support structures for poultry holders are brought into contact with cleaning liquid in the liquid bath as according to processing step C). Yet another option is to heat the cleaning liquid such that (optionally in combination with soap) its cleaning action is enhanced.

It is also possible to partially immerse only the underside of the support structure for poultry holders in the liquid bath successively several times during processing step C); this also has an advantageous effect on the cleaning action of the method. A possibility also already noted above which increases the cleaning efficiency is that the liquid is moved actively in the liquid bath during processing step C). The advantages of all these variants have already been stated above in respect of the device according to this application.

The invention will be further elucidated hereinbelow on the basis of the non-limitative exemplary embodiments shown in the following figures. Herein:
figure 1 shows a schematic view of a device according to the present invention,
figure 2 shows a schematic view of an alternative embodiment variant of a device according to the present invention, and
figure 3 shows a perspective view of a production line for emptying and cleaning support structures with poultry holders.

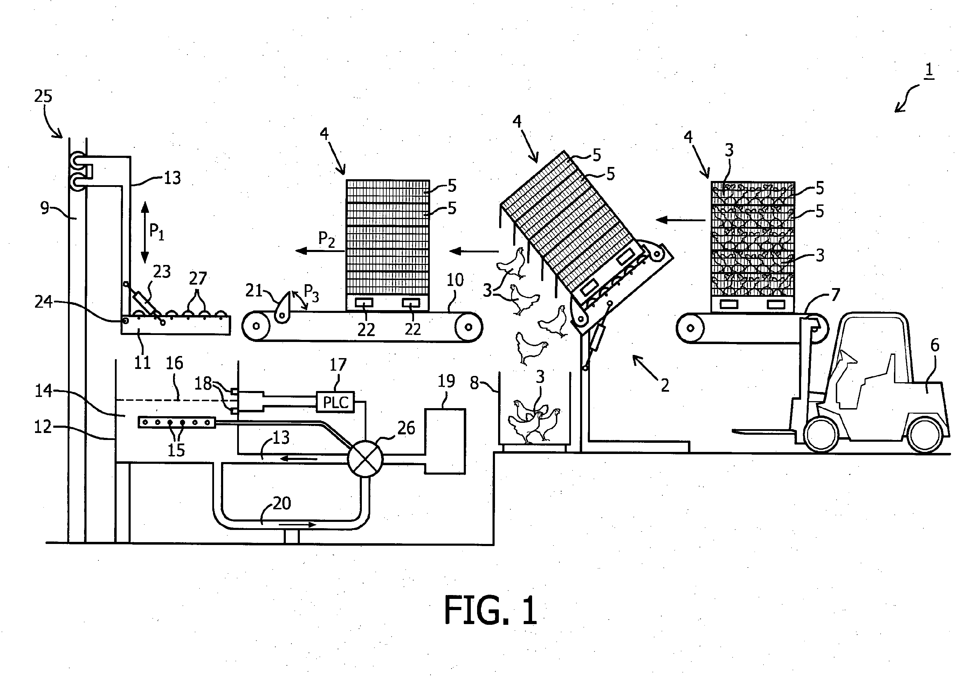

Figure 1 shows a schematic view of a device 1 according to the present invention. Device 1 is provided with an unloading system 2 where support structures 4 with poultry holders 5 filled with chickens 3 can be emptied. A support structure 4 filled with live chickens 3 is placed on a conveyor belt 7 by a fork-lift truck 6 and fed in mechanized manner to unloading system 2, where support structure 4 is tilted such that chickens 3 fall out of poultry holders 5, whereby the chickens enter a discharge system 8. From discharge system 8 the chickens 3 are for instance carried to a slaughter line (not shown here).

Device 1 is further provided with a liquid bath 12 open at the top for receiving only the underside of support structure 4 for poultry holders 5. Support structure 4 can be carried into liquid bath 12 by a vertical conveyor 9. Connecting to liquid bath 12 is a liquid supply 13 with which cleaning liquid 14 is carried into liquid bath 12. Vertical conveyor 9 is adapted to respectively place support structure 4 with its underside in and remove it from liquid bath 12 as according to arrow P₁. For this purpose support structure 4 is supplied beforehand in horizontal direction as according to arrow P₂ by a horizontal conveyor 10 to vertical conveyor 9 along a first transport path - here in the form of an endless conveyor belt 10. Vertical conveyor 9 comprises a support surface 11 which is provided with openings and with which support structure 4 can be supported. Support surface 11 can be positioned so that it connects to horizontal conveyor 10. This makes it possible for a support structure 4 for poultry holders 5 to be pushed from horizontal conveyor 10 onto transport rollers 27 arranged in support surface 11. The horizontal conveyor 10 is connected via an arm 13 to a lift installation 25 which is shown highly schematicaliy.

Arranged in liquid bath 12 are nozzles 15 with which cleaning liquid 14 supplied under pressure by a pump 26 results in liquid flow preferably directed toward a support structure 4 placed only with its underside in liquid bath 12. Nozzles 15 are preferably situated for this purpose below liquid surface 16 such that they cause flow or turbulence of cleaning liquid 14 in liquid bath 12. The liquid level (i.e. the height of liquid surface 16) and can be regulated by controlling pump 26 by means of an intelligent control 17 coupled to sensors 18. Pump 26 can here feed cleaning liquid 14 from a liquid buffer 19 when the liquid level drops below a determined minimum. Liquid bath 12 is further provided with a discharge 20 connecting to pump 26 for discharging cleaning liquid 14. from liquid bath 12, wherein cleaning means (not shown), such as for instance filters, can also be arranged in discharge 20 for treating cleaning liquid 14 during circulation. Liquid bath 12 is preferably manufactured at least partially from stainless steel and is preferably further embodied such that fouling accumulating in bath 12, partially under the influence of flow possibly present in bath 12, collects for instance at one or more locations on the bottom where it can be easily removed.

In order to enable separation of the feed of successive support structures 4, horizontal conveyor 10 is provided with a buffer catch 21 which is displaceable as according to arrow P₃ and which in an upward pivoted position prevents the passage of support structures 4. Support structure 4 can be removed directly from support surface 11 after cleaning, for instance using openings 22 intended for the prongs of fork-lift truck 6. It is on the other hand also possible to discharge the cleaned support structure 4 by means of a separate discharge belt (not shown in this figure) or with horizontal conveyor 10. Before discharge of support structure 4 it is desirable to first allow draining thereof above liquid bath 12; or, still better, by rotating support surface 11 through a limited angle of 0-30° around a rotation shaft 24 by means of a drive 23. The result is that support structure 4 comes to lie at an angle, with the consequence that at least some of the liquid still present in the underside of support structure 4 will be drained and will drip into liquid bath 12.

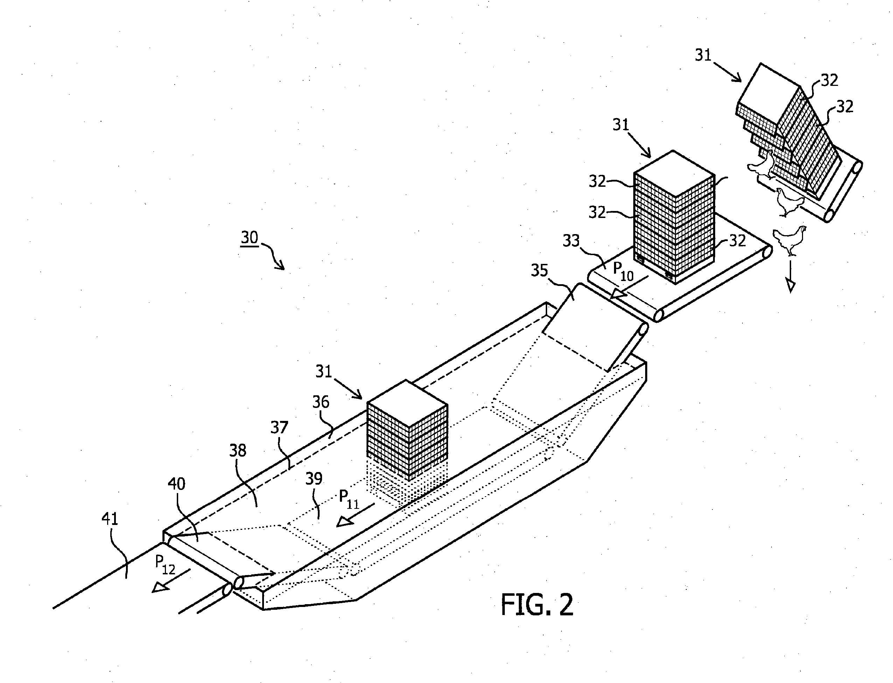

Figure 2 shows a schematic perspective view of a device 30 for cleaning the underside of support structures 31 for poultry holders 32. A support structure 31 is fed as according to arrow P₁₀ by a horizontal conveyor 33 along a first transport path in a manner such that continuous tubes 34 in the bottom segment of support structure 31 lie parallel to transport direction P₁₀. An inclining conveyor 35 displaces support structures 31 downward with a vertical directional component along a second transport path such that they move into liquid bath 36 with the bottom part of support structure 31 below liquid surface 37 of cleaning liquid 38. A subsequent horizontal bottom conveyor 39 moves support structure 31 as according to arrow P₁₁ along a third transport path through liquid bath 36, and so also through cleaning liquid 38. A relative liquid flow of cleaning liquid 38 relative to the underside of support structure 31 will thus be created, this contributing toward a thorough cleaning. At the end of liquid bath 36 the support structures 31 for poultry holders 32 are carried obliquely upward again along a fourth transport path by an elevator conveyor 40 and finally discharged further as according to arrow P₁₂ by a horizontal discharge conveyor 41. A number of the control mechanisms as already described with reference to figure 1 can also form part of the device 30 as shown in figure 2, although they are not shown here as such.

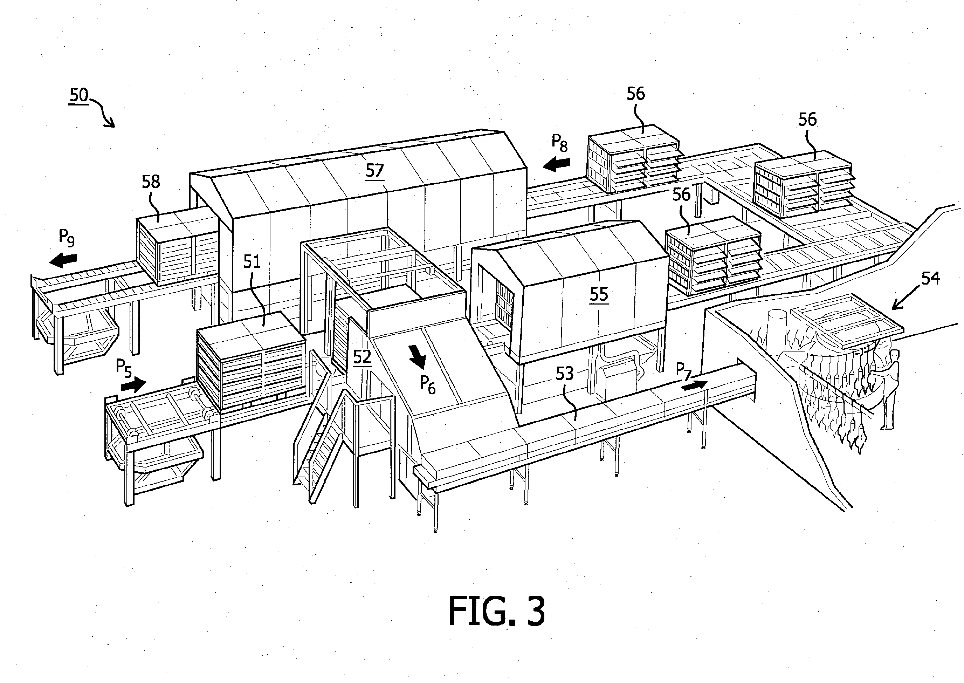

Figure 3 shows a perspective view of a production line 50 for emptying and cleaning support structures 51 with poultry holders. A support structure 51 with poultry holders filled with livestock is fed as according to arrow P₅ and carried through an unloading system 52, from where the poultry is carried as according to arrow P₆ through a stunning tunnel 53 and then carried as according to arrow P₇ to the start of a slaughter line 54. After progressing through unloading system 52, the support structure 51 with poultry holders passes through a pre-washer 55. The thus pre-cleaned support structure 56 with poultry holders is then carried as according to arrow P₈ through a support structure cleaner 57, in which only the underside of the pre-cleaned support structure 56 is moved through a cleaning bath. The process which takes place in support structure cleaner 57 is not further shown in this figure, but a device as shown in figure 3 would for instance be highly suitable here. The finally cleaned support structure 58 leaves production line 50 as according to arrow P₉.

In addition to the shown embodiments, diverse variants are possible which are all deemed to fall within the scope of protection of the following claims.

## Claims

1. Device for mechanized emptying of poultry holders and subsequent cleaning of a support structure of the emptied poultry holders on an underside only, comprising:
- an unloading system for mechanized opening and emptying of poultry holders placed in the support structure;
- a liquid bath accessible to the support structure from the upper side;
- transport means provided with at least one displaceable carrying surface for supporting the support structure, which transport means lead from the unloading system to the liquid bath and subsequently through and out of the liquid bath such that only the underside of the support structure is immersed in the liquid bath and then removed again from the liquid bath by the transport means; and
- a liquid supply for carrying a cleaning liquid into the liquid bath.

2. Device as claimed in claim 1, **characterized in that** the transport means are provided with a substantially horizontal first transport path for transporting the support structure from the unloading system to the liquid bath and, connecting thereto, an at least partially vertical second transport path which leads into the liquid bath for immersion of only the underside of the support structure for poultry holders in the liquid bath.

3. Device as claimed in claim 2, **characterized in that** the transport means are provided with a third transport path leading through the liquid bath and connecting to the second transport path and having a substantially horizontal directional component.

4. Device as claimed in claim 3, **characterized in that** the transport means are provided with a fourth transport path which connects to the third transport path, the fourth transport path comprising at least a vertical directional component and leading from a position in the liquid bath to a position above the liquid bath.

5. Device as claimed in any of the foregoing claims, **characterized in that** the carrying surface of the transport means is pivotable between a substantially horizontal position and an inclining position.

6. Device as claimed in any of the foregoing claims, **characterized in that** the liquid supply comprises a water feed and a feed for disinfectant.

7. Device as claimed in any of the foregoing claims, **characterized in that** the liquid supply comprises at least one nozzle located in the liquid bath.

8. Device as claimed in any of the foregoing claims, **characterized in that** the liquid supply is provided with a sensor for detecting the height of a liquid level in the liquid bath, and with control means for maintaining a desired level of the liquid in the liquid bath.

9. Device as claimed in any of the foregoing claims, **characterized in that** the liquid bath is provided with liquid turbulence-generating means.

10. Device as claimed in any of the foregoing claims, **characterized in that** the unloading system for emptying poultry holders placed in a support structure is coupled in mechanically rigid manner to the transport means leading through the liquid bath.

11. Method for mechanized emptying of poultry holders and subsequent cleaning of a support structure of the emptied poultry holders on an underside only, comprising the processing steps of:
A) opening and emptying the poultry holders placed in a support structure in mechanized manner in an unloading system;
B) displacing the support structure for poultry holders in supported and mechanized manner from the unloading system to a liquid bath;
C) immersing the support structure for poultry holders only partially with the underside in supported manner in the liquid bath with cleaning agent in order to disinfect only the underside of the support structure; and
D) removing the support structure for poultry holders, cleaned on the underside only, in supported manner from the liquid bath and allowing it to at least partially drain above the liquid bath.

12. Method as claimed in claim 11, **characterized in that** the support structure is placed in an inclining position during draining of the underside of the cleaned support structure as according to processing step D).

13. Method as claimed in claim 11 or 12, **characterized in that** only the underside of the support structure for poultry holders is immersed in the liquid bath successively several times during processing step C).

14. Method as claimed in any of the claims 11-13, **characterized in that** only the underside of the support structure for poultry holders is moved through the liquid bath at an advancing speed during processing step C).

15. Method as claimed in any of the claims 11-14, **characterized in that** the liquid is moved actively in the liquid bath during processing step C).

16. Method as claimed in any of the claims 11-15, **characterized in that** before only the underside of the support structure for poultry holders is brought into contact with cleaning liquid in the liquid bath as according to processing step C) the underside of the support structure is pre-cleaned.

## Patentansprüche

1. Vorrichtung zum mechanischen Entleeren von Geflügelkäfigen und zum nachfolgenden Reinigen einer Stützstruktur der entleerten Geflügelkäfige lediglich auf einer Unterseite, wobei die Vorrichtung Folgendes umfasst:
- ein Entladesystem zum mechanischen Öffnen und Entleeren von in der Stützstruktur platzierten Geflügelkäfigen;
- ein Flüssigkeitsbad, das der Stützstruktur von der Oberseite aus zugänglich ist;
- Transportmittel, die mit mindestens einer verschiebbaren Trageoberfläche zur Abstützung der Stützstruktur ausgestattet sind, wobei die Transportmittel vom Entladesystem zum Flüssigkeitsbad und nachfolgend durch das Flüssigkeits-bad und aus diesem Bad heraus so verlaufen, dass lediglich die Unterseite der Stützstruktur in das Flüssigkeitsbad eintaucht und dann wieder durch die Transportmittel aus dem Flüssigkeits-bad entfernt wird; und
- eine Flüssigkeitsversorgung, um eine Reinigungs-flüssigkeit in das Flüssigkeitsbad einzutragen.

2. Vorrichtung nach Anspruch 1, **dadurch gekennzeichnet, dass** die Transportmittel mit einem im Wesentlichen horizontalen ersten Transportweg, um die Stützstruktur vom Entladesystem zum Flüssigkeitsbad zu transportieren, sowie, in Verbindung damit stehend, mit einem mindestens teilweise vertikalen zweiten Transportweg vorgesehen sind, der in das Flüssigkeitsbad hinein verläuft, um lediglich die Unterseite der Stützstruktur für Geflügelkäfige in das Flüssigkeitsbad einzutauchen.

3. Vorrichtung nach Anspruch 2, **dadurch gekennzeichnet, dass** die Transportmittel mit einem dritten Transportweg vorgesehen sind, der durch das Flüssigkeitsbad verläuft, mit dem zweiten Transportweg verbunden ist und eine im Wesentlichen horizontale Richtungskomponente hat.

4. Vorrichtung nach Anspruch 3, **dadurch gekennzeichnet, dass** die Transportmittel mit einem vierten Transportweg vorgesehen sind, der mit dem dritten Transportweg verbunden ist, wobei der vierte Transportweg mindestens eine vertikale Richtungskomponente umfasst und von einer Position im Flüssigkeitsbad zu einer Position oberhalb des Flüssigkeitsbades verläuft.

5. Vorrichtung nach einem der vorstehend aufgeführten Ansprüche, **dadurch gekennzeichnet, dass** die Trageoberfläche der Transportmittel zwischen einer im Wesentlichen horizontalen Position und einer Neigungsposition schwenkbar ist.

6. Vorrichtung nach einem der vorstehend aufgeführten Ansprüche, **dadurch gekennzeichnet, dass** die Flüssigkeitsversorgung eine Wasserzuspeisung und eine Desinfektionsmittelzuspeisung umfasst.

7. Vorrichtung nach einem der vorstehend aufgeführten Ansprüche, **dadurch gekennzeichnet, dass** die Flüssigkeitsversorgung mindestens eine im Flüssigkeitsbad vorgesehene Düse umfasst.

8. Vorrichtung nach einem der vorstehend aufgeführten Ansprüche, **dadurch gekennzeichnet, dass** die Flüssigkeitsversorgung mit einem Sensor, um die Höhe eines Flüssigkeitsniveaus im Flüssigkeitsbad zu ermitteln, sowie mit Kontrollmitteln ausgestattet ist, um ein erwünschtes Niveau der Flüssigkeit im Flüssigkeitsbad aufrechtzuerhalten.

9. Vorrichtung nach einem der vorstehend aufgeführten Ansprüche, **dadurch gekennzeichnet, dass** das Flüssigkeitsbad mit Flüssigkeitsturbulenzerzeugungsmitteln ausgestattet ist.

10. Vorrichtung nach einem der vorstehend aufgeführten Ansprüche, **dadurch gekennzeichnet, dass** das Entladesystem zum Entleeren von in einer Stützstruktur platzierten Geflügelkäfigen in mechanisch starrer Weise mit den durch das Flüssigkeitsbad verlaufenden Transportmitteln gekoppelt ist.

11. Verfahren zum mechanischen Entleeren von Geflügelkäfigen und zum nachfolgenden Reinigen einer Stützstruktur der entleerten Geflügelkäfige lediglich auf einer Unterseite, wobei das Verfahren die folgen-den Verfahrens schritte umfasst:
A) Öffnen und Entleeren der in einer Stützstruktur platzierten Geflügelkäfige in einer mechanischen Weise in einem Entladesystem;
B) Verschieben der Stützstruktur für Geflügelkäfige in einer abgestützten und mechanischen Weise vom Entladesystem zu einem Flüssigkeits-bad;
C) Eintauchen, lediglich teilweise, der Stütz-struktur für Geflügelkäfige mit der Unterseite in einer abgestützten Weise in das Flüssigkeitsbad mit Reinigungsmittel, um lediglich die Unterseite der Stützstruktur zu desinfizieren; und
D) Entfernen der lediglich an der Unterseite gereinigten Stützstruktur für Geflügelkäfige in einer abgestützten Weise aus dem Flüssigkeits-bad und mindestens teilweises Ablaufenlassen der Flüssigkeit von der Struktur oberhalb des Flüssigkeitsbades.

12. Verfahren nach Anspruch 11, **dadurch gekennzeichnet, dass** die Stützstruktur während des Ablaufenlassens von der Unterseite der gereinigten Stützstruktur nach Verfahrensschritt D) in einer Neigungsposition platziert ist.

13. Verfahren nach Anspruch 11 oder 12, **dadurch gekennzeichnet, dass** lediglich die Unterseite der Stützstruktur für Geflügelkäfige aufeinanderfolgend mehrere Male während des Verfahrensschritts C) in das Flüssigkeitsbad eingetaucht wird.

14. Verfahren nach einem der Ansprüche 11 bis 13, **dadurch gekennzeichnet, dass** lediglich die Unterseite der Stützstruktur für Geflügelkäfige mit einer Zuführungsgeschwindigkeit während des Verfahrensschritts C) durch das Flüssigkeitsbad bewegt wird.

15. Verfahren nach einem der Ansprüche 11 bis 14, **dadurch gekennzeichnet, dass** die Flüssigkeit während des Verfahrensschritts C) aktiv im Flüssigkeitsbad bewegt wird.

16. Verfahren nach einem der Ansprüche 11 bis 15, **dadurch gekennzeichnet, dass** die Unterseite der Stützstruktur vorgereinigt wird, bevor lediglich die Unterseite der Stützstruktur für Geflügelkäfige in Kontakt mit Reinigungsflüssigkeit im Flüssigkeitsbad nach Verfahrensschritt C) gebracht wird.

## Revendications

1. Dispositif de guidage mécanisé de casiers à volailles et de nettoyage subséquent d'une structure de support des casiers à volailles vidés sur un côté inférieur uniquement, comprenant:
- un système de déchargement pour l'ouverture et la fermeture mécanisée de casiers à volailles placés dans la structure de support;
- un bain de liquide accessible à la structure de support à partir du côté supérieur;
- des moyens de transport pourvus d'au moins une surface de transport déplaçable pour supporter la structure de support, lesquels moyens de transport mènent du système de déchargement jusqu'au bain de liquide et subséquemment à travers le bain de liquide et hors de celui-ci de telle sorte qu'uniquement le côté inférieur de la structure de support soit immergé dans le bain de liquide puis retiré à nouveau du bain de liquide au moyen des moyens de transport; et
- une alimentation en liquide pour acheminer un liquide de nettoyage jusque dans le bain de liquide.

2. Dispositif selon la revendication 1, **caractérisé en ce que** les moyens de transport sont pourvus d'une première voie de transport sensiblement horizontale pour supporter la structure de support à partir du système de déchargement jusqu'au bain de liquide et, se raccordant à celle-ci, une deuxième voie de transport au moins partiellement verticale qui mène jusque dans le bain de liquide pour l'immersion d'uniquement le côté inférieur de la structure de support pour les casiers à volailles dans le bain de liquide.

3. Dispositif selon la revendication 2, **caractérisé en ce que** les moyens de transport sont pourvus d'une troisième voie de transport menant à travers le bain de liquide et se raccordant à la deuxième voie de transport et ayant une composante directionnelle sensiblement horizontale.

4. Dispositif selon la revendication 3, **caractérisé en ce que** les moyens de transport sont pourvus d'une quatrième voie de transport qui se raccorde à la troisième voie de transport, la quatrième voie de transport comprenant au moins une composante directionnelle verticale et menant d'une position dans le bain de liquide jusqu'à une position au-dessus du bain de liquide.

5. Dispositif selon l'une quelconque des revendications précédentes, **caractérisé en ce que** la surface de transport des moyens de transport peut être pivotée entre une position sensiblement horizontale et une position d'inclinaison.

6. Dispositif selon l'une quelconque des revendications précédentes, **caractérisé en ce que** l'alimentation en liquide comprend une amenée d'eau et une amenée de désinfectant.

7. Dispositif selon l'une quelconque des revendications précédentes, **caractérisé en ce que** l'alimentation en liquide comprend au moins une buse située dans le bain de liquide.

8. Dispositif selon l'une quelconque des revendications précédentes, **caractérisé en ce que** l'alimentation en liquide est pourvue d'un capteur pour détecter la hauteur d'un niveau de liquide dans le bain de liquide, et de moyens de commande pour maintenir un niveau souhaité de liquide dans le bain de liquide.

9. Dispositif selon l'une quelconque des revendications précédentes, **caractérisé en ce que** le bain de liquide est pourvu de moyens de génération de turbulences dans le liquide.

10. Dispositif selon l'une quelconque des revendications précédentes, **caractérisé en ce que** le système de déchargement pour vider les casiers à volailles placés dans une structure de support est accouplé d'une manière mécaniquement rigide au moyen de transport menant à travers le bain de liquide.

11. Procédé de guidage mécanisé de casiers à volailles et de nettoyage subséquent d'une structure de support des casiers à volailles vidés sur un côté inférieur uniquement, comprenant les étapes de traitement consistant à:
A) ouvrir et vider les casiers à volailles placés dans une structure de support d'une manière mécanisée dans un système de déchargement;
B) déplacer la structure de support pour les casiers à volaille d'une manière supportée et mécanisée à partir du système de déchargement jusqu'à un bain de liquide;
C) immerger la structure de support pour les casiers à volailles seulement partiellement avec le côté inférieur d'une manière supportée dans le bain de liquide comprenant un agent de nettoyage afin de désinfecter uniquement le côté inférieur de la structure de support; et
D) retirer, d'une manière supportée, la structure de support pour les casiers à volailles, nettoyée sur le côté inférieur uniquement, du bain de liquide et lui permettre de se vidanger au moins partiellement au-dessus du bain de liquide.

12. Procédé selon la revendication 11, **caractérisé en ce que** la structure de support est placée dans une position d'inclinaison pendant la vidange du côté inférieur de la structure de support nettoyée conformément à l'étape de traitement D).

13. Procédé selon la revendication 11 ou 12, **caractérisé en ce qu'**uniquement le côté inférieur de la structure de support pour les casiers à volailles est immergé dans le bain de liquide plusieurs fois de suite pendant l'étape de traitement C).

14. Procédé selon l'une quelconque des revendications 11 à 13, **caractérisé en ce qu'**uniquement le côté inférieur de la structure de support pour les casiers à volailles est déplacé à travers le bain de liquide à une vitesse d'avance pendant l'étape de traitement C).

15. Procédé selon l'une quelconque des revendications 11 à 14, **caractérisé en ce que** le liquide est déplacé activement dans le bain de liquide pendant l'étape de traitement C).

16. Procédé selon l'une quelconque des revendications 11 à 15, **caractérisé en ce qu'**avant qu'uniquement le côté inférieur de la structure de support pour casiers à volailles soit amené en contact avec le liquide de nettoyage dans le bain de liquide conformément à l'étape de traitement C), le côté inférieur de la structure de support est pré-nettoyé.
